# EUROPEAN PATENT SPECIFICATION

(11) **EP 4 310 992 B1**
(45) Date of publication and mention of the grant of the patent: **02.09.2026**
(21) Application number: 22849792.1
(22) Date of filing: 20.07.2022
(51) Int. Cl.: H01M 10/643, H01M 10/653, H01M 10/613, H01M 50/213

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 29.07.2021 KR 20210100168
(43) Date of publication of application: 24.01.2024
(73) Proprietor: LG ENERGY SOLUTION, LTD., Seoul 07335 (KR)
(72) Inventor: KIM, Hee Gyu, Daejeon 34122 (KR); CHOI, Bum, Daejeon 34122 (KR); CHOI, Seungbin, Daejeon 34122 (KR)
(74) Representative: Plasseraud IP
(86) International application number: PCT/KR2022/010599
(87) International publication number: WO 2023/008816

(56) References cited:
- WO-A1-2014/186626
- CN-A- 106 716 675
- CN-A- 110 574 221
- JP-A- 2008 251 262
- KR-A- 20180 064 485
- KR-A- 20180 105 465
- KR-A- 20200 036 640
- US-A1- 2019 288 355

## Description

### [Technical Field]

### CROSS-REFERENCE TO RELATED APPLICATION

This application claims priority to and the benefit of Korean Patent Application No. 10-2021-0100168 filed in the Korean Intellectual Property Office on July 29, 2021.

The present invention relates to a battery module including a cylindrical battery cell and a battery pack including the same. More particularly, the present invention relates to a battery module capable of efficiently dissipating heat generated in the battery cell to the outside, and a battery pack including the same.

### [Background Art]

Recently, there has been a growing interest in rising prices of energy sources caused by depletion of fossil fuels as well as environmental pollution, and a demand for environmentally-friendly alternative energy sources has become an indispensable factor for future life. Accordingly, research on various electric power production technologies such as atomic power, solar power, wind power, tidal power, etc. continues, and electric power storage devices for more efficient use of the generated energy are also drawing attention.

Moreover, as technology development and demand for mobile devices and battery cars increases, the demand for batteries as energy sources is rapidly increasing, and accordingly, many studies on batteries capable of meeting various demands have been conducted. In particular, in terms of materials, there is a high demand for lithium rechargeable batteries such as lithium ion batteries, lithium ion polymer batteries, and the like which have advantages such as high energy density, discharge voltage, and output stability.

Such rechargeable batteries are classified depending on a structure of an electrode assembly in which a positive electrode, a negative electrode, and a separator interposed between the positive electrode and the negative electrode are stacked. Representative examples thereof may include a jelly-roll type (wound-type) of electrode assembly in which a positive electrode and a negative electrode having a long sheet-like shape are wound with a separator interposed therebetween, a stacked type of electrode assembly in which a plurality of positive electrodes and negative electrodes that are cut in a predetermined size unit are sequentially stacked with separators interposed therebetween, and the like. Recently, a stack/folding type of electrode assembly in which unit cells obtained by stacking positive and negative electrodes of a predetermined unit with separators interposed therebetween, which are disposed on a separation film, are sequentially wound has been developed as an electrode assembly having an advanced structure in which the jelly-roll type and the stack type are mixed in order to solve problems of the jelly-roll types and the stack types of electrode assemblies.

Such electrode assemblies are accommodated in a pouch case, a cylindrical can, a rectangular case, or the like depending on the purpose of use, to manufacture batteries.

Among them, the cylindrical battery has the advantages of easy manufacturing and high energy density per unit weight, and is used as an energy source of various devices ranging from portable computers to battery cars. In addition, a battery module including a plurality of cylindrical batteries may be used as an energy source for a small automobile or the like.

However, in the case of the battery module including a plurality of cylindrical batteries as described above, the energy density is high, and therefore, it is necessary to more efficiently dissipate heat generated in the battery to the outside. For this purpose, in the prior art, a plurality of parts was assembled for heat dissipation. However, in this case, there is a problem that a sufficient heat dissipation effect cannot be obtained because there are many parts inside the pack and the heat resistance is increased.

In the prior art, document CN110574221 A relates to a battery module comprising cylindrical battery cells arranged adjacent to each other, a case accommodating the battery cell assembly and a single resin layer disposed to at least one side of the length direction ends of the cylindrical battery cells with both functions of fixing the cells and transmitting heat to the case.

### [Disclosure]

### [Technical Problem]

The problem to be solved by the present invention is to provide, in a battery module including a cylindrical battery, a battery module capable of simultaneously maintaining structural rigidity while obtaining a sufficient heat dissipation effect by lowering thermal resistance inside the battery module, and a battery pack including the same.

The technical problem to be solved of the present invention is not limited to the above-described problem, and problems not mentioned will be clearly understood by a person of ordinary skill in the art from the present specification and the accompanying drawings.

### [Technical Solution]

A battery module according to an embodiment of the present invention is in accordance with claim 1.

In realization modes:
The thermal transmission resin layer may also be formed between the intermediate case and the case.

The case may be in a form of a tube in which the upper and lower portions are opened, respectively, and an upper cover and a lower cover may be combined in the upper and lower portions, respectively.

The upper cover may include a plurality of resin injection holes for injecting a thermal transmission resin for forming the thermal transmission resin layer.

A plurality of resin injection holes may be formed adjacent to the case.

The upper cover may include at least one first protrusion part that is inserted and coupled to the inside of the case and protruded from the side of the upper cover toward the case.

The intermediate case may include at least one second protrusion part protruded towards the case from the exterior surface of the intermediate case.

The case may include at least one third protrusion part protruded from the inner surface of the case towards the intermediate case.

The upper cover may be inserted and coupled to the inside of the case, and the case may include at least one fourth protrusion part protruded from the inner surface of the case towards the upper cover.

A battery pack according to another embodiment of the present invention may include at least one battery module described above.

### [Advantageous Effects]

According to an embodiment of the present invention, in the battery module including the cylindrical battery, it is possible to simultaneously maintain structural rigidity while obtaining a sufficient heat dissipation effect by lowering the thermal resistance inside the battery module.

The effects of the object of the present invention are not limited to the above-described effects, and effects not mentioned will be clearly understood by a person of ordinary skill in the art from the present specification and the accompanying drawings.

### [Description of the Drawings]

FIG. 1 is a view showing a battery module according to an embodiment of the present invention.
FIG. 2 is a view showing a state before assembling a case of a battery module of FIG. 1.
FIG. 3 is a view showing a cross-section of a portion A of FIG. 1.
FIG. 4 is a view showing an upper surface of FIG. 1.
FIG. 5 is a view explaining a method of injecting a thermal transmission resin to form a thermal transmission resin layer in a battery module of FIG. 1.
FIG. 6 is an enlarged view showing a part corresponding to a part C of FIG. 4 as another embodiment of the present invention.
FIG. 7 is a view showing a cross-section of a part corresponding to a part B of FIG. 1 as another embodiment of the present invention.
FIG. 8a and FIG. 8b are views of a cross-section of a part corresponding to a part B of FIG. 1 and a part corresponding to a part C of FIG. 4 as another embodiment, respectively.

### (Reference Signs)

10: battery module
100: battery cell assembly
110: cylindrical battery cell
120: intermediate case
130: fixing resin layer
210: upper cover
220: lower cover
300: case
400: thermal transmission resin layer
211: resin injection hole
212: first protrusion part
121: second protrusion part
301: third protrusion part
302: fourth protrusion part

### [Mode for Invention]

The present invention will be described more fully hereinafter with reference to the accompanying drawings, in which embodiments of the invention are shown. As those skilled in the art would realize, the described embodiment may be modified in various different ways, all without departing from the spirit or scope of the present invention.

In order to clearly describe the present invention, parts that are irrelevant to the description are omitted, and identical or similar constituent elements throughout the specification are denoted by the same reference numerals.

The size and thickness of each element are arbitrarily illustrated for ease of description, and the present disclosure is not necessarily limited to those illustrated in the drawings. In the drawings, the thickness of layers, films, panels, regions, etc., are exaggerated for clarity. Also, in the following drawings, for convenience of explanation, the thickness of some layers and areas is exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, in the specification, the phrase "on a plane" means when an object portion is viewed from above, and the phrase "on a cross-section" means when a cross-section taken by vertically cutting an object portion is viewed from the side.

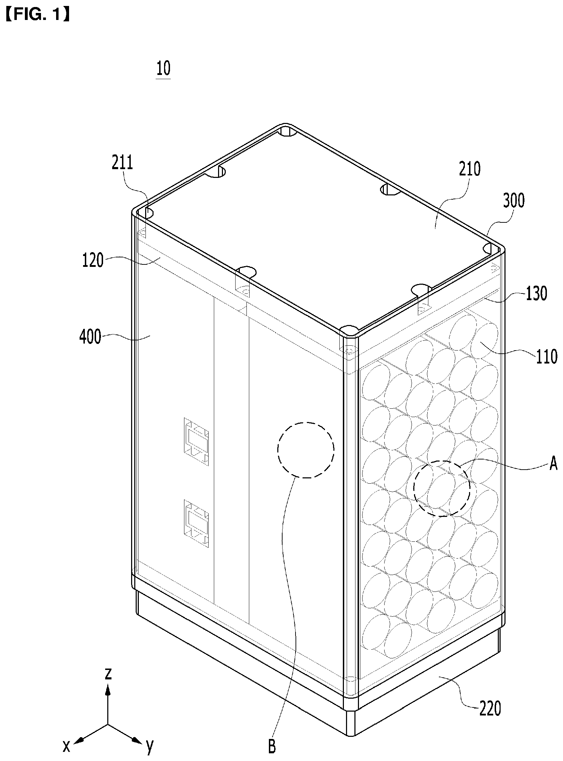

Hereinafter, a battery module according to an embodiment of the present invention is described with reference to FIG. 1 to FIG. 5.

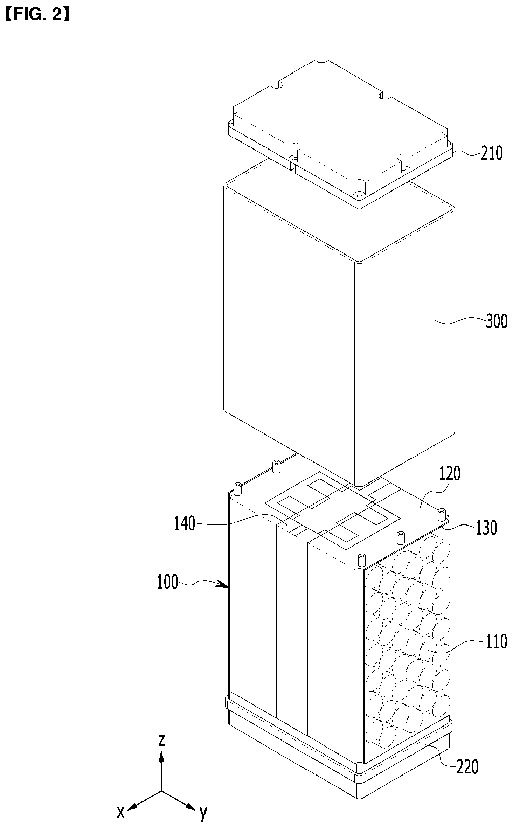

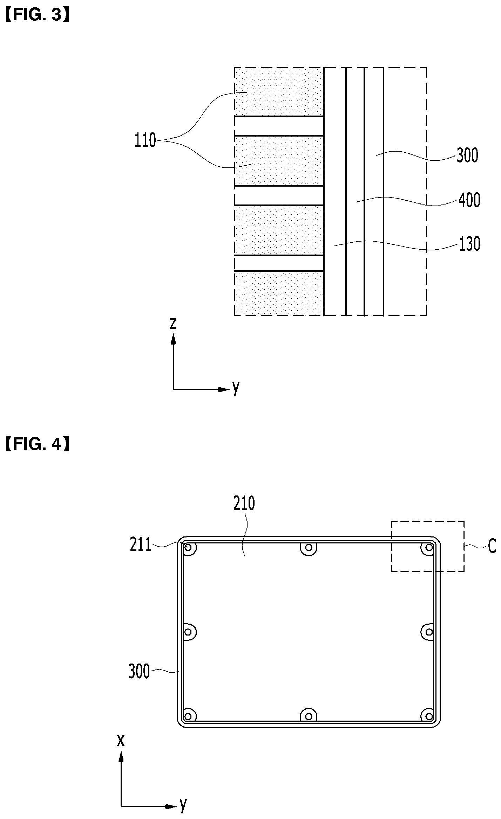

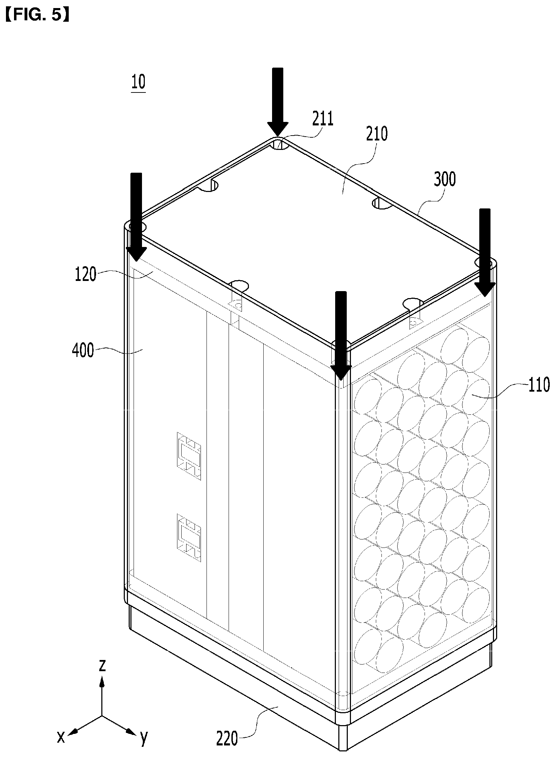

FIG. 1 is a view showing a battery module according to an embodiment of the present invention, FIG. 2 is a view showing a state before assembling a case of a battery module of FIG. 1, FIG. 3 is a view showing a cross-section of a portion A of FIG. 1, FIG. 4 is a view showing an upper surface of FIG. 1, and FIG. 5 is a view explaining a method of injecting a thermal transmission resin to form a thermal transmission resin layer in a battery module of FIG. 1.

Referring to FIG. 1 to FIG. 5, a battery module 10 according to an embodiment of the present invention includes: a battery cell assembly 100 including a plurality of cylindrical battery cells 110 arranged in a state in which side surfaces are adjacent to each other; a case 300 accommodating the battery cell assembly 100; a fixing resin layer 130 disposed to at least one side of length direction ends of a plurality of cylindrical battery cells 110 and fixing a plurality of cylindrical battery cells 110; and a thermal transmission resin layer 400 formed between the fixing resin layer 130 and the case 300 and in contact with the fixing resin layer 130 and the case 300. In addition, the battery cell assembly 100 further includes an intermediate case 120 surrounding the side surface of the cylindrical battery cell 110 disposed to the outside in a state in which a plurality of cylindrical battery cells 110 are arranged.

The battery cell assembly 100 has a structure in which the cylindrical battery cells 110 are arranged in a state in which the side surfaces are adjacent to each other. That is, in the drawing, a plurality of cylindrical battery cells 110 elongated in the y-axis direction may be stacked so that the side surfaces thereof are adjacent to each other in the x-axis and y-axis directions, and thus may be disposed to have a hexahedral shape as a whole. The battery cell assembly 100 may include the intermediate case 120 disposed to surround the side surface of the cylindrical battery cell 110 disposed on the outermost side in a band shape. As shown in FIG. 2, the intermediate case 120 may be formed to surround the length direction ends of the cylindrical battery cells 110, i.e., the side surfaces except for both ends in the y-axis direction. The intermediate case 120 may be formed to surround the cylindrical battery cells 110 of one layer, and two or more intermediate cases 120 may be included in one battery module 10 to include two or more battery cell assemblies 100. In the present embodiment, it is shown that two battery cell assemblies 100 disposed side by side in the y-axis direction are included, and the insulating cover 140 is disposed between them, but the present embodiment is but is not limited thereto.

The battery cell assembly 100 includes a fixing resin layer 130 disposed to one side of the length direction ends of the cylindrical battery cell 110 . Referring to FIG. 2 and FIG. 3, the fixing resin layer 130 is disposed to the y-axis direction end of the cylindrical battery cell 110 in the drawing, and serves to fix the cylindrical battery cells 110. As the fixing resin layer 130, a resin such as silicone, urethane, epoxy, or acryl may be used, but is not particularly limited.

The battery cell assembly 100 is accommodated in the case 300 in the form of a square tube, and the upper cover 210 and the lower cover 220 are coupled to both ends of the case 300, respectively. However, the configuration of the case 300 and the cover 210 and 220 is not limited thereto and may be modified in various forms.

In the present embodiment, as shown in FIG. 1 and FIG. 2, the case 300 in which both ends in the z-axis direction are opened is included. That is, the cylindrical battery cells 110 in the case 300 may be accommodated to be disposed in a direction parallel to the openings on both sides of the case 300. Also, as shown in FIG. 2, one end of the battery cell assembly 100 may be inserted through the part opened in the z-axis direction and accommodated inside the case 300. The case 300 may be made of a material having high thermal conductivity. For example, it may be made of a material such as aluminum having low thermal resistance and high thermal conductivity. Accordingly, heat generated from the cylindrical battery cell 110 may be effectively dissipated to the outside.

Between the battery cell assembly 100 and the case 300, the thermal transmission resin layer 400 is disposed. As shown in FIG. 5, the thermal transmission resin layer 400 may be formed by injecting a liquid thermal transmission resin in the arrow direction from the top in a state in which the battery cell assembly 100 is accommodated in the case 300, and then curing it inside. To this end, as shown in FIG. 4 and FIG. 5, the upper cover 210 may include a plurality of resin injection holes 211. However, the present configuration is not limited thereto, and the thermal transmission resin may be injected in various forms between the battery cell assembly 100 and the case 300.

The thermal transmission resin layer 400, as shown in FIG. 3, particularly, may be formed in contact with the fixing resin layer 130 and the case 300. As a result, heat generated from the cylindrical battery cell 110 may be directly transferred to the thermal transmission resin layer 400 through only the fixing resin layer 130, and directly transferred to the case 300 in the direct contact with the thermal transmission resin layer 400, thereby efficiently dissipating heat to the outside. As the thermal transmission resin layer 400, a material with high thermal conductivity may be used, for example, a thermal resin such as silicone, urethane, or epoxy resin may be used.

In addition, since the thermal transmission resin layer 400 is also disposed between the battery cell assembly 100, particularly the side of the battery cell assembly 100 and the case 300, not only between the fixing resin layer 130 and the case 300, but it is also disposed on both sides of the x-axis direction in the drawing, that is, between the intermediate case 120 and the case 300, thereby heat generated from the internal battery cell assembly 100 may be effectively dissipated to the outside.

As described above, according to the present embodiment, while the cylindrical battery cells 110 are firmly fixed by the fixing resin layer 130, the thermal transmission resin layer 400 in direct contact therewith is in directly contact with the case 300, so that heat generated from the cylindrical battery cell 110 may be easily discharged to the outside without an additional configuration. Particularly, since the thermal transmission resin layer 400 and the case 300 are made of a material with high thermal conductivity and low thermal resistance, it prevents an increase in thermal resistance that may occur when a plurality of parts are present and quickly dissipates heat to the outside. In addition, even in the part where the fixing resin layer 130 is not disposed, since the thermal transmission resin layer 400 is disposed to cover the battery cell assembly 100, it is possible to quickly dissipate heat in all directions. At this time, since the thermal transmission resin layer 400 directly contacts the case 300 while wrapping the four sides of the battery cell assembly 100, an empty space or an air gap between the battery cell assembly 100 and the case 300 is removed, thereby maximizing the heat dissipation effect.

In addition, since the thermal transmission resin layer 400 is formed by being poured in a liquid state and cured inside, there is no empty space between the battery cell assembly 100 and the case 300 and all four sides are filled with the thermal transmission resin, thereby it is possible to prevent the battery cell assembly 100 from moving inside the case 300, thus improving the overall rigidity of the battery module 10 without many intervening parts.

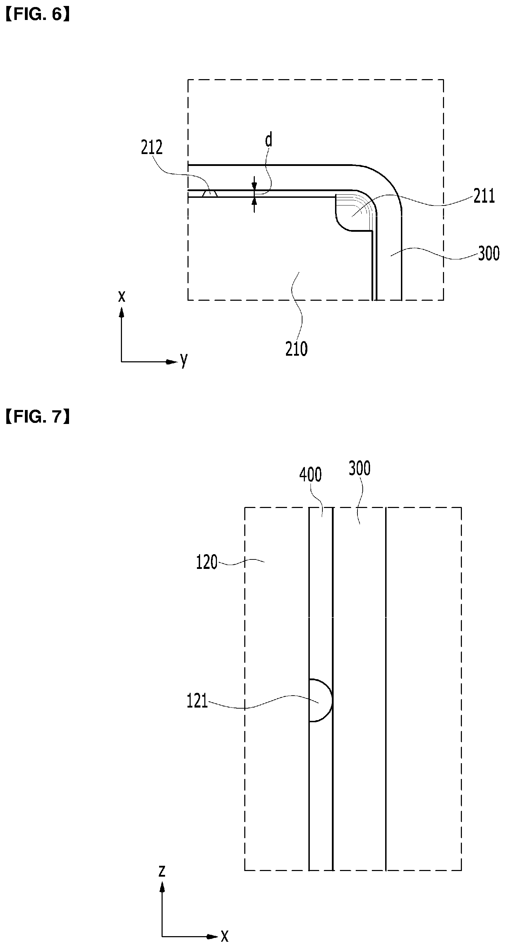

Next, the battery module according to another embodiment of the present invention is described with reference to FIG. 6 and FIG. 7. The description of the same configuration as the embodiment described above will be omitted and only other parts will be described.

FIG. 6 is an enlarged view showing a part corresponding to a part C of FIG. 4 as another embodiment of the present invention, and FIG. 7 is a view showing a cross-section of a part corresponding to a part B of FIG. 1 as another embodiment of the present invention.

As shown in FIG. 6, the upper cover 210 includes at least one first protrusion part 212 protruded from the side of the upper cover 210 toward the case 300. The first protrusion part 212 is protruded from the upper cover 210 and is formed to be in contact with the inner surface of the case 300. Accordingly, a constant distance may be maintained between the upper cover 210 and the case 300. In this case, the height d of the first protrusion part 212 may be 1 mm or less so that a constant distance may be maintained.

Also, as shown in FIG. 7, the intermediate case 120 includes at least one second protrusion part 121 protruded toward the case 300 from the outer surface of the intermediate case 120, that is, the surface facing the case 300. The second protrusion part 121 is protruded from the intermediate case 120 and formed to be in contact with the inner surface of the case 300. Accordingly, a certain distance may be maintained between the intermediate case 120 and the case 300, and the height of the second protrusion part 121 may also be 1 mm or less.

As such, according to the first and second protrusion parts 212 and 121, the distance between the battery cell assembly 100 and the case 300 and the upper cover 210 and the case 300 may be kept constant, whereby the heatconducting resin may be constantly injected at the corresponding interval, and as a result, it is possible to form the thermal transmission resin layer 400 with a uniform thickness. Therefore, the heat dissipation effect by the thermal transmission resin layer 400 may be achieved evenly throughout.

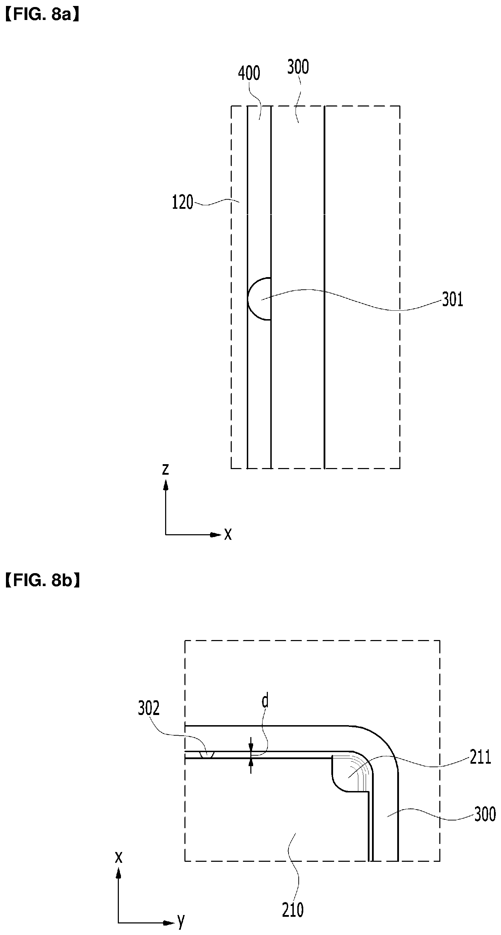

Next, the battery module according to another embodiment of the present invention is described with reference to FIG. 8a and FIG. 8b. The description of the same configuration as the embodiment described above will be omitted and only other parts will be described.

FIG. 8a and FIG. 8b are views of a cross-section of a part corresponding to a part B of FIG. 1 and a part corresponding to a part C of FIG. 4 as another embodiment, respectively.

As shown in FIG. 8A, the case 300 includes at least one third protrusion part 301 protruded from the inner surface of the case 300 toward the intermediate case 120. The third protrusion part 301 is protruded from the inner surface of the case 300 and formed so as to be in contact with the intermediate case 120. In addition, although not shown, a third protrusion part 301 may be formed in the portion where the inner surface of the case 300 and the fixing resin layer 130 face each other. Accordingly, a constant distance may be maintained between the battery cell assembly 100 and the case 300, and the height of the third protrusion part 301 may also be 1 mm or less.

As shown in FIG. 8b, the case 300 includes at least one fourth protrusion part 302 protruded from the inner surface o f the case 300 toward the upper cover 210. The fourth protrusion part 302 is protruded from the inner surface of the case 300, and is formed to be in contact with the upper cover 210. Accordingly, a constant distance may be maintained between the upper cover 210 and the case 300, and the height of the fourth protrusion part 302 may also be 1 mm or less.

As such, according to the third and fourth protrusion parts 301 and 302, the interval between the battery cell assembly 100 and the case 300, and the upper cover 210 and the case 300, may be kept constant, whereby the heatconducting resin may be constantly injected at the corresponding interval, as a result, it is possible to form the thermal transmission resin layer 400 with a uniform thickness. Therefore, the heat dissipation effect by the thermal transmission resin layer 400 may be achieved evenly throughout. In addition, the first and second protrusion parts 212 and 121, and the third and fourth protrusion parts 301 and 302 described above, may be provided together, and the configuration is not particularly limited.
10: battery module
100: battery cell assembly
110: cylindrical battery cell
120: intermediate case
130: fixing resin layer
210: upper cover
220: lower cover
300: case
400: thermal transmission resin layer
211: resin injection hole
212: first protrusion part
121: second protrusion part
301: third protrusion part
302: fourth protrusion part

## Claims

1. A battery module (10) comprising:
at least one battery cell assembly (100) including a plurality of cylindrical battery cells (110) arranged in a state that side surfaces are adjacent to each other;
a case (300) accommodating the battery cell assembly;
a fixing resin layer (130) disposed to at least one side of the length direction ends of the plurality of cylindrical battery cells and fixing the plurality of cylindrical battery cells; **characterized in that** the battery module comprises
a thermal transmission resin layer (400) formed between the fixing resin layer and the case, and between the side of the battery cell assembly and the case, and in contact with the fixing resin layer and the case;
wherein the battery cell assembly further includes an intermediate case (120) surrounding the side surfaces of the plurality of cylindrical battery cells (110).

2. The battery module of claim 1, wherein
the thermal transmission resin layer is further formed between the intermediate case and the case.

3. The battery module of claim 1, further comprising an upper cover (210) and a lower cover (220), wherein the case (300) is in a form of a tube in which upper and lower portions are opened, respectively, and the upper cover and a lower cover are combined in the upper and the lower portions, respectively.

4. The battery module of claim 3, wherein
the upper cover (210) includes a plurality of resin injection holes (211) for injecting a thermal transmission resin for forming the thermal transmission resin layer (400).

5. The battery module of claim 4, wherein
the plurality of resin injection holes (211) are formed adjacent to the case.

6. The battery module of claim 3, wherein
the upper cover (210) includes at least one first protrusion part (212) that is inserted and coupled to the inside of the case (300) and protruded from the side of the upper cover toward the case.

7. The battery module of claim 1, wherein
the intermediate case (120) includes at least one second protrusion part (121) protruded towards the case (300) from the exterior surface of the intermediate case (120).

8. The battery module of claim 1, wherein
the case includes (300) at least one third protrusion part (301) protruded from the inner surface of the case towards the intermediate case (120).

9. The battery module of claim 3, wherein
the upper cover (210) is inserted and coupled to the inside of the case (300), and
the case includes at least one fourth protrusion part (302) protruded from the inner surface of the case towards the upper cover.

10. A battery pack comprising at least one battery module (10) of any one of claim 1 to claim 9.

## Patentansprüche

1. Batteriemodul (10), umfassend:
mindestens eine Batteriezellenanordnung (100), die eine Vielzahl von zylindrischen Batteriezellen (110) enthält, die in einem Zustand angeordnet sind, in dem die Seitenflächen aneinandergrenzen;
ein Gehäuse (300), das die Batteriezellenanordnung aufnimmt;
eine Befestigungsharzschicht (130), die auf mindestens einer Seite der Längsrichtungsenden der Vielzahl von zylindrischen Batteriezellen angeordnet ist und die Vielzahl von zylindrischen Batteriezellen befestigt; **dadurch gekennzeichnet, dass** das Batteriemodul umfasst:
eine Wärmeübertragungsharzschicht (400), die zwischen der Befestigungsharzschicht und dem Gehäuse und zwischen der Seite der Batteriezellenanordnung und dem Gehäuse ausgebildet ist und mit der Befestigungsharzschicht und dem Gehäuse in Kontakt steht;
wobei die Batteriezellenanordnung ferner ein Zwischengehäuse (120) enthält, das die Seitenflächen der Vielzahl von zylindrischen Batteriezellen (110) umgibt.

2. Batteriemodul nach Anspruch 1, wobei
die Wärmeübertragungsharzschicht ferner zwischen dem Zwischengehäuse und dem Gehäuse ausgebildet ist.

3. Batteriemodul nach Anspruch 1, ferner umfassend eine obere Abdeckung (210) und eine untere Abdeckung (220), wobei das Gehäuse (300) in Form eines Rohrs vorliegt, in dem obere und untere Abschnitte jeweils geöffnet sind, und die obere Abdeckung und eine untere Abdeckung jeweils in den oberen und den unteren Abschnitten kombiniert sind.

4. Batteriemodul nach Anspruch 3, wobei
die obere Abdeckung (210) eine Vielzahl von Harzeinspritzlöchern (211) zum Einspritzen eines Wärmeübertragungsharzes zur Bildung der Wärmeübertragungsharzschicht (400) enthält.

5. Batteriemodul nach Anspruch 4, wobei
die Vielzahl von Harzeinspritzlöchern (211) angrenzend an das Gehäuse ausgebildet ist.

6. Batteriemodul nach Anspruch 3, wobei
die obere Abdeckung (210) mindestens einen ersten Vorsprungsteil (212) enthält, der in das Innere des Gehäuses (300) eingesetzt und damit gekoppelt ist und von der Seite der oberen Abdeckung in Richtung des Gehäuses vorsteht.

7. Batteriemodul nach Anspruch 1, wobei
das Zwischengehäuse (120) mindestens einen zweiten Vorsprungsteil (121) enthält, der von der Außenfläche des Zwischengehäuses (120) in Richtung des Gehäuses (300) vorsteht.

8. Batteriemodul nach Anspruch 1, wobei
das Gehäuse (300) mindestens einen dritten Vorsprungsteil (301) enthält, der von der Innenfläche des Gehäuses in Richtung des Zwischengehäuses (120) vorsteht.

9. Batteriemodul nach Anspruch 3, wobei
die obere Abdeckung (210) in das Innere des Gehäuses (300) eingesetzt und damit gekoppelt ist, und das Gehäuse mindestens einen vierten Vorsprungsteil (302) enthält, der von der Innenfläche des Gehäuses in Richtung der oberen Abdeckung vorsteht.

10. Batteriepack, umfassend mindestens ein Batteriemodul (10) nach einem der Ansprüche 1 bis 9.

## Revendications

1. Module de batterie (10) comprenant :
au moins un ensemble de cellules de batterie (100) incluant une pluralité de cellules de batterie cylindriques (110) agencées dans un état où les surfaces latérales sont adjacentes les unes aux autres ;
un boîtier (300) logeant l'ensemble de cellules de batterie ;
une couche de résine de fixation (130) disposée sur au moins un côté des extrémités dans le sens de la longueur de la pluralité de cellules de batterie cylindriques et fixant la pluralité de cellules de batterie cylindriques ; **caractérisé en ce que** le module de batterie comprend :
une couche de résine de transmission thermique (400) formée entre la couche de résine de fixation et le boîtier, et entre le côté de l'ensemble de cellules de batterie et le boîtier, et en contact avec la couche de résine de fixation et le boîtier ;
dans lequel l'ensemble de cellules de batterie inclut en outre un boîtier intermédiaire (120) entourant les surfaces latérales de la pluralité de cellules de batterie cylindriques (110).

2. Module de batterie selon la revendication 1, dans lequel
la couche de résine de transmission thermique est en outre formée entre le boîtier intermédiaire et le boîtier.

3. Module de batterie selon la revendication 1, comprenant en outre un couvercle supérieur (210) et un couvercle inférieur (220), dans lequel le boîtier (300) est sous la forme d'un tube dans lequel les parties supérieure et inférieure sont ouvertes, respectivement, et le couvercle supérieur et un couvercle inférieur sont combinés dans les parties supérieure et inférieure, respectivement.

4. Module de batterie selon la revendication 3, dans lequel
le couvercle supérieur (210) inclut une pluralité de trous d'injection de résine (211) pour injecter une résine de transmission thermique pour former la couche de résine de transmission thermique (400).

5. Module de batterie selon la revendication 4, dans lequel
la pluralité de trous d'injection de résine (211) sont formés adjacents au boîtier.

6. Module de batterie selon la revendication 3, dans lequel
le couvercle supérieur (210) inclut au moins une première partie saillante (212) qui est insérée et couplée à l'intérieur du boîtier (300) et fait saillie depuis le côté du couvercle supérieur vers le boîtier.

7. Module de batterie selon la revendication 1, dans lequel
le boîtier intermédiaire (120) inclut au moins une deuxième partie saillante (121) faisant saillie vers le boîtier (300) depuis la surface extérieure du boîtier intermédiaire (120).

8. Module de batterie selon la revendication 1, dans lequel
le boîtier (300) inclut au moins une troisième partie saillante (301) faisant saillie depuis la surface intérieure du boîtier vers le boîtier intermédiaire (120).

9. Module de batterie selon la revendication 3, dans lequel
le couvercle supérieur (210) est inséré et couplé à l'intérieur du boîtier (300), et le boîtier inclut au moins une quatrième partie saillante (302) faisant saillie depuis la surface intérieure du boîtier vers le couvercle supérieur.

10. Bloc-batterie comprenant au moins un module de batterie (10) selon l'une quelconque des revendications 1 à 9.
